# EUROPÄISCHE PATENTSCHRIFT

(11) **EP 2 524 196 B1**
(45) Veröffentlichungstag und Bekanntmachung des Hinweises auf die Patenterteilung: **20.10.2021**
(21) Anmeldenummer: 11700239.4
(22) Anmeldetag: 06.01.2011
(51) Int. Cl.: F01N 3/20, G01F 1/708

(54) **VERFAHREN UND VORRICHTUNG ZUR BESTIMMUNG DER AUS EINEM TANK ENTNOMMENEN MENGE EINES FLÜSSIGEN REDUKTIONSMITTELS**
METHOD AND APPATUS FOR DETERMINING THE AMOUNT OF A LIQUID REDUCING AGENT REMOVED FROM A TANK
PROCÉDÉ ET APPAREIL PERMETTANT DE DÉTERMINER LA QUANTITÉ D'UN AGENT RÉDUCTEUR LIQUIDE RETIRÉE D'UN RÉSERVOIR

(30) Priorität: 13.01.2010 DE 102010004615
(43) Veröffentlichungstag der Anmeldung: 21.11.2012
(73) Patentinhaber: Vitesco Technologies GmbH, 30165 Hannover (DE)
(72) Erfinder: MAUS, Wolfgang, 51429 Bergisch Gladbach (DE); WIERES, Ludwig, 51491 Overath (DE); HODGSON, Jan, 53840 Troisdorf (DE); BRÜCK, Rolf, 51429 Bergisch Gladbach (DE)
(86) Internationale Anmeldenummer: PCT/EP2011/050121
(87) Internationale Veröffentlichungsnummer: WO 2011/086026

(56) Entgegenhaltungen:
- EP-A2- 1 091 197
- WO-A1-2008/090433
- DE-A1-102007 000 538
- DE-C1- 19 807 935
- FR-A1- 2 509 867
- US-A1- 2004 163 459
- US-A1- 2006 173 607
- US-A1- 2007 022 826
- US-B1- 6 273 120

## Beschreibung

Die vorliegende Erfindung betrifft ein Verfahren zur Bestimmung der aus einem Tank entnommenen Menge einer Flüssigkeit pro Zeiteinheit, wobei die Flüssigkeit einem Abgas einer Verbrennungskraftmaschine diskontinuierlich zugeführt wird.

Zur Entfernung von Stickoxiden (NOₓ) im Abgasstrom von Verbrennungskraftmaschinen wird bevorzugt ein flüssiges Reduktionsmittel in den Abgasstrom eingespritzt, um die im Abgasstrom enthaltenen Stickoxide mittels eines Katalysators in elementaren Stickstoff (N₂) und Wasser (H₂O) umzuwandeln. Als flüssiges Reduktionsmittel wird bevorzugt eine aktive Substanz, beispielsweise Ammoniak (NH₃) und/oder Harnstoff (CH₄N₂O), in Wasser gelöst und hinzugegeben. Zur Bevorratung des flüssigen Reduktionsmittels ist ein Tank vorgesehen, der mit einer Fördereinheit zusammenwirkt, so dass eine Förderung des Reduktionsmittels aus dem Tank hin zum Abgasstrom ermöglicht ist.

Um den Tank nach Verbrauch eines Großteils der Flüssigkeit rechtzeitig neu auffüllen zu können, ist es wünschenswert, zu jedem Zeitpunkt über die im Tank verbleibende Flüssigkeitsmenge informiert zu sein. Es sind verschiedene Methoden bekannt, um den Tankinhalt zu bestimmen. So ist bekannt, mit Hilfe eines Füllstandsanzeigers die Füllhöhe der im Tank verbleibenden Flüssigkeit zu bestimmen und aus dieser die verbleibende Flüssigkeitsmenge zu bestimmen. Von Nachteil bei dieser Methode ist, dass vor allem bei flachen Tanks während der Fahrt die Bestimmung der Füllhöhe nur ungenau möglich ist, da durch Fahrbahnunebenheiten die Flüssigkeit ständig in Bewegung ist. Auch beim Halten auf einer schrägen Fläche ist eine genaue Bestimmung der Flüssigkeitsmenge im Tank nicht möglich.

Andere Methoden sehen vor, durch die Überwachung von Pumpenparametern die geförderte Menge von Flüssigkeit zu ermitteln. Nachteilig hierbei ist, dass zur genauen Bestimmung der Flüssigkeitsmenge weitere Parameter der Flüssigkeit vorliegen müssen, wie etwa Druck, Dichte und/oder Temperatur. Bei Systemen, die in Strömungsrichtung hinter der Pumpe eine Zwischenspeicherung der Flüssigkeit vorsehen und eine Rückführung der Flüssigkeit in den Tank ermöglichen, ist die genaue, dem Abgas zugeführte Flüssigkeitsmenge nicht bekannt, da die in den Tank zurückgeführte Flüssigkeitsmenge nicht erfasst wird.

Ferner ist bekannt, mechanisch bewegte Zähl- oder Messeinrichtungen zur Durchflussmessung einzusetzen. Diese liefern gerade bei hochtransienten, also sich schnell ändernden, Durchflussmengen ungenaue Werte. Verfahren und Vorrichtungen nach dem Stand der Technik sind in den US 6 273 120 B1, DE 10 2007 000538 A1 und DE 198 07 935 C1 beschrieben.

Aufgabe der Erfindung ist es daher, die mit Bezug auf den Stand der Technik geschilderten Probleme zumindest teilweise zu lindern und insbesondere ein Verfahren anzugeben, mit dem die einem Abgas zugeführte Flüssigkeitsmenge bestimmt werden kann und mit dem auf den Zustand anderer Komponenten einer Abgasnachbehandlungseinheit geschlossen werden kann. Zudem soll eine konkrete Reduktionsmittel-Bereitstellungsvorrichtung für ein Kraftfahrzeug vorgeschlagen werden, die einfach aufgebaut ist sowie sicher und genau ein entsprechendes Verfahren umsetzen kann.

Diese Aufgaben werden gelöst mit einem Verfahren gemäß den Merkmalen des Patentanspruchs 1. Weitere vorteilhafte Weiterbildungen der Erfindung sind in den abhängig formulierten Ansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Die Aufgaben werden gelöst durch ein Verfahren zur Bestimmung der aus einem Tank entnommenen Menge eines flüssigen Reduktionsmittels zur Abgasreinigung pro Zeiteinheit, wobei das Reduktionsmittel von einer Pumpe in Strömungsrichtung einem Rücklauf-Ventil zugeführt wird und das Rücklauf-Ventil das Reduktionsmittel zu einem Rücklauf oder einer Injektionsleitung leitet, wobei in der Injektionsleitung ein Zwischenspeicher angeordnet ist, und das Reduktionsmittel von dem Zwischenspeicher einem Abgas einer Verbrennungskraftmaschine diskontinuierlich zugeführt wird, umfassend mindestens die folgenden Schritte:
- Zuführen des Reduktionsmittels zu dem Abgas über die Injektionsleitung,
- Erfassen von zeitabhängigen Drücken gleichzeitig jeweils an mindestens zwei Stellen stromabwärts vom Zwischenspeicher in der Injektionsleitung,
- Bestimmen der zugeführten Reduktionsmittelmenge pro Zeiteinheit aus den erfassten zeitabhängigen Drücken.

Mit einem "diskontinuierlichen" Zuführen ist gemeint, dass kein stetiger (mit anderen Worten auch kein konstanter, gleichbleibender, etc.) Flüssigkeitsfluss durch die Injektionsleitung vorliegt. Beispielsweise kann der Flüssigkeitsfluss zeitweise aussetzen und schlagartig wieder einsetzen. Dies liegt beispielsweise vor, wenn zwischen dem Tank und der Injektionsleitung ein (z. B. elastischer und/oder starrer) Zwischenspeicher und ggf. ein Ventil angeordnet sind, wobei der Zwischenspeicher durch eine Pumpe mit Flüssigkeit aus dem Tank unter Druck gesetzt wird, und die Zugabe der Flüssigkeit in die Injektionsleitung über das Ventil (z. B. zum Abzweigen eines Rücklaufs zurück in den Tank) geregelt wird. Zum Zuführen von Flüssigkeit in die Injektionsleitung kann das Ventil für vorgebbare Zeiten (insbesondere für den Betrieb der Vorrichtung) geöffnet werden.

Erfindungsgemäß erfolgt das Zuführen der Flüssigkeit über eine Injektionsleitung, an deren abgasseitigen Ende (mindestens) ein Injektor angeordnet sein kann, der ein Zerstäuben der Flüssigkeit in das Abgas ermöglicht. Der Injektor kann ebenfalls über eine Art Ventil geregelt werden, gleichermaßen ist ggf. auch eine Düse einsetzbar.

Die Druckaufnehmer zum Erfassen der Drücke sind an einer ersten Stelle und an einer zweiten Stelle der Injektionsleitung angeordnet. Die erste Stelle ist dabei vorzugsweise möglichst nah am Tank der Flüssigkeit gelegen (aber in Strömungsrichtung der Flüssigkeit der Pumpe nachfolgend - Druckseite) und die zweite Stelle vorzugsweise möglichst nah am Ende der Injektionsleitung in der Nähe des Injektors. Auf diese Weise ist ein möglichst großer Abstand zwischen der ersten Stelle und der zweiten Stelle gegeben, wodurch ein genaueres Bestimmen der zugeführten Flüssigkeitsmenge pro Zeiteinheit möglich ist. Da bereits elektrische Zuleitungen und Signalleitungen zu dem Tank bzw. dem Injektor vorhanden sind, ist ferner ein einfaches Anschließen der Drucksensoren an die vorhandene Elektronik möglich.

Die Zeiteinheit, für die die zugeführte Flüssigkeitsmenge bestimmt wird, sollte höchstens so kurz gewählt werden, dass noch eine genaue Druckmessung möglich ist. Andererseits sollte sich der Druck in der Zeiteinheit nicht übermäßig ändern.

Durch den erfassten Druck an der ersten Stelle und an der zweiten Stelle kann unter Zuhilfenahme geeigneter Gleichungen für Strömungen in Rohren die Flussgeschwindigkeit der Flüssigkeit in der Injektionsleitung pro Zeiteinheit bestimmt werden. Aus der Flussgeschwindigkeit pro Zeiteinheit und Daten zur Geometrie des Injektionsrohrs und/oder aus experimentellen Daten zu der betreffenden Injektionsleitung kann eine Flüssigkeitsmenge pro Zeiteinheit bestimmt werden. Eine ausführliche Diskussion der Zugrunde liegenden Gleichungen ist beispielsweise in der DE 31 28 168 C2 gegeben.

Unter einer "Flüssigkeit" wird insbesondere eine Substanz verstanden, die zumindest bei Raumtemperatur einen flüssigen Aggregatszustand hat.

Die Flüssigkeit ist ein Reduktionsmittel zur Behandlung von Stickoxiden, wie sie im Abgas von Verbrennungskraftmaschinen auftreten. Unter einem flüssigen Reduktionsmittel wird bspw. neben Ammoniak auch ein Ammoniakvorläufer verstanden wie bspw. Harnstoff. Das flüssige Reduktionsmittel kann zusätzlich wenigstens eine gefrierpunktserniedrigende Substanz aufweisen, ebenso wie kleine, die Förderung nicht behindernde, Partikel. Insofern ist mit "Flüssigkeit" ein Oberbegriff insbesondere für genau diese Reduktionsmittelarten angegeben.

Vorzugsweise wird die zwischen einem ersten Zeitpunkt und einem zweiten Zeitpunkt entnommene gesamte Flüssigkeitsmenge durch Integration der entnommenen Flüssigkeitsmengen pro Zeiteinheit über den Zeitraum vom ersten Zeitpunkt bis zum zweiten Zeitpunkt ermittelt. Dies bedeutet insbesondere, dass sich bei diskret ermittelten Flüssigkeitsmengen pro Zeiteinheit die gesamte Flüssigkeitsmenge durch Addition aller diskret ermittelten Flüssigkeitsmengen pro Zeiteinheit in dem betrachteten Zeitraum ergibt.

Vorteilhaft werden die Drücke an den mindestens zwei Stellen mit einer Wiederholungsfrequenz, die umgekehrt proportional zur Zeiteinheit ist, von mindestens 100 Hz [1/Sekunde], bevorzugt mindestens 1.000 Hz, besonders bevorzugt mindestens 10.000 Hz, erfasst. Durch eine hohe Wiederholungsfrequenz der Messung ist es möglich, die zugeführte gesamte Flüssigkeitsmenge in dem Zeitraum besonders genau zu bestimmen. Ferner ist es vorteilhaft, wenn die Druckaufnehmer die Messwerte mit einem relativen Messfehler kleiner als 2 %, bevorzugt kleiner als 0,5 %, aufnehmen.

Besonders vorteilhaft ist es weiterhin, wenn zu dem ersten Zeitpunkt die in dem Tank vorhandene Flüssigkeitsmenge bestimmt und die zu dem zweiten Zeitpunkt vorhandene Flüssigkeitsmenge durch Subtraktion der ermittelten entnommenen Flüssigkeitsmenge von der zum ersten Zeitpunkt vorhandenen Flüssigkeitsmenge ermittelt wird. Auf diese Weise ist zu jedem Zeitpunkt die vorhandene Flüssigkeitsmenge im Tank bekannt und auch die Menge Flüssigkeit, die während einer Injektion dem Abgas zugeführt wurde.

Um die vorhandene Flüssigkeitsmenge bestimmen zu können, muss zu einem Zeitpunkt eine Flüssigkeitsmenge vorgegeben werden, die sich in dem Tank befindet. Dies kann beispielsweise nach dem Befüllen des Tanks manuell erfolgen. Es kann aber auch ein Sensor vorgesehen sein, der den Befüllvorgang überwacht und die Flüssigkeitsmenge im Tank nach dem Befüllvorgang ermittelt. Ein einziger Mcsspunkt, beispielsweise bei stehender horizontaler Ausrichtung des Kraftfahrzeugs nach dem Befüllvorgang, würde genügen, um ab diesem Zeitpunkt die Flüssigkeitsmenge in dem Tank mit dem erfindungsgemäßen Verfahren zu bestimmen.

Ferner ist es vorteilhaft, dass die in dem Tank vorhandene Flüssigkeitsmenge nach dem ersten Zeitpunkt quasi kontinuierlich ermittelt wird, so dass zu jedem Zeitpunkt ein Wert für die im Tank vorhandene Flüssigkeitsmenge zur Verfügung steht. Ein Auffüllen des Tanks, bevor dieser völlig entleert ist, ist somit möglich. Bei bekannter Nachfüllmenge ist zudem ein Nachkalibrieren des Systems möglich.

Ferner ist es vorteilhaft, wenn das Zuführen von Flüssigkeit in diskontinuierlichen Injektionen von weniger als 100 ms [Millisekunde], bevorzugt von weniger als 10 ms Dauer. Das Verfahren ist somit bei Injektionsvorgängen, die durch mechanische Durchflussmessmethoden kaum gemessen werden können, besonders gut einsetzbar.

Besonders vorteilhaft ist es, wenn höchstens 0,1 ml [Milliliter], bevorzugt höchstens 0,05 ml, besonders bevorzugt höchstens 0,015 ml Flüssigkeit bei einer Injektion zugeführt werden. Das Verfahren ist somit auch zur Bestimmung sehr kleiner Flüssigkeitsmengen geeignet.

Als ebenfalls vorteilhaft hat es sich herausgestellt, das Messen der Drücke nur während des Zuführens der Flüssigkeit durchzuführen. Auf diese Weise wird verhindert, dass durch Störungen, wie z. B. durch Unebenheiten im Straßenbelag verursachte Schwingungen, Flüssigkeitsmengen scheinbar gemessen werden, die nicht geflossen sind.

Besonders vorteilhaft ist es, wenn die zugeführte Flüssigkeitsmenge über die Lösung von instationären Strömungsgleichungen kompressibler Medien bestimmt wird, wie sie beispielsweise in der DE 31 28 168 C2 offenbart sind. Bei diskontinuierlichem Zuführen der Flüssigkeit zu einem Abgas handelt es sich um Vorgänge, die durch stationäre Gleichungen nicht genau genug beschrieben werden. Die vorgeschlagene Verfahrensweise ermöglicht somit auch eine sehr genaue Messung der Flüssigkeitsmenge pro Zeitintervall bei hochtransienten Vorgängen. Bei solchen Vorgängen müssen auch Flüssigkeiten als kompressibel betrachtet werden.

Vorzugsweise werden die Drücke an den mindestens zwei Stellen in einem Zeitabstand erneut erfasst, in dem ein Schallsignal nicht von der ersten Stelle zu der zweiten Stelle durch die Flüssigkeit in der Injektionsleitung gelangt. Die instationäre Strömungsgleichung kompressibler Medien beruht darauf, dass eine Druckwelle das Medium komprimiert und diese Kompression die Ausbreitungsgeschwindigkeit der Druckwelle beeinflusst. Dies wiederum schlägt sich in der Geschwindigkeit des Flüssigkeitsflusses nieder. Es ist daher sinnvoll, eine zweite Messung durchzuführen, bevor eine Schallwelle, die die erste Stelle bereits passiert hat, die zweite Stelle erreicht.

Einer Weiterbildung der Erfindung folgend ist es vorteilhaft, wenn die entnommenen Flüssigkeitsmengen pro Zeiteinheit mit vorgebbaren Sollmengen verglichen werden und bei Abweichungen oberhalb vorgebbarer Toleranzen ein Störungssignal erzeugt wird. Durch ein solches Verfahren ist auch eine sogenannte "On Board Diagnose" möglich, indem die aus der Druckmessung ermittelten zugeführten Flüssigkeitsmengen auf Plausibilität mit Parametern anderer Elemente verglichen werden. Die "Sollmengen" können insbesondere als in einer Steuerung gespeicherte und/oder berechnete Werte(bereiche) vorliegen.

Ferner ist es vorteilhaft, wenn die entnommenen Flüssigkeitsmengen pro Zeiteinheit mit vorgebbaren Sollmengen verglichen werden und bei Unterschreiten der Sollwerte erneut Flüssigkeit zugeführt wird. Es kann somit dem Abgas so oft Flüssigkeit kontrolliert zugeführt werden bis die vorgegebene Sollmenge erreicht ist oder die Dauer des Zuführens von Flüssigkeit verlängert wird, mithin also die Länge eines Einspritzpulses verlängert wird. Auf diese Weise ist gewährleistet, dass dem Katalysator jederzeit genügend Reduktionsmittel für eine optimale Umsetzung der Stickoxide zur Verfügung steht.

Ebenfalls vorteilhaft in diesem Zusammenhang ist es, die Sollmengen in Abhängigkeit von Parametern anderer Komponenten eines Abgassystems der Verbrennungskraftmaschine vorzugeben. So ist es bspw. möglich, auf eine Fehlfunktion des Injektors zu schließen, wenn eigentlich ein Flüssigkeitsfluss aufgrund eines geöffneten Ventils und ausreichendem Druck vorhanden sein sollte, dieser sich aber nicht oder nur begrenzt einstellt. Der nicht vorhandene oder nur begrenzte Flüssigkeitsfluss kann durch das erfindungsgemäße Verfahren detektiert werden.

Die Erfindung findet insbesondere auch Anwendung bei einer Reduktionsmittel-Bereitstellungsvorrichtung für ein Kraftfahrzeug mit einem Tank für flüssiges Reduktionsmittel, einer Fördereinheit, die eingerichtet ist, das flüssige Reduktionsmittel mit einer Injektionsleitung an einen Injektor zu fördern, welcher an einer Abgasleitung des Kraftfahrzeuges angebracht werden kann, wobei das Reduktionsmittel von einer Pumpe in Strömungsrichtung einem Rücklauf-Ventil zugeführt wird, und das Rücklauf-Ventil das Reduktionsmittel zu einem Rücklauf zum Tank oder der Injektionsleitung leitet, und in der Injektionsleitung ein Zwischenspeicher angeordnet ist, und wobei stromabwärts vom Zwischenspeicher in der Injektionsleitung zumindest zwei Drucksensoren zur Erfassung eines Druckes vorgesehen sind und eine Steuerung zur Durchführung des erfindungsgemäßen Verfahrens eingerichtet ist. Im Hinblick auf die bevorzugten Ausprägungen der Reduktionsmittel-Bereitstellungsvorrichtung (z. B. Position der Sensoren, der Fördereinheit, etc.) sei auf die Erläuterungen im Zusammenhang mit dem erfindungsgemäßen Verfahren ebenso verwiesen, wie auf die Darstellungen bzw. nachfolgende Beschreibung der Figur.

Das erfindungsgemäße Verfahren kann alternativ oder kumulativ auch zur Bestimmung einer Menge einer Flüssigkeit pro Zeiteinheit hin zu einer Abgasleitung eines Kraftfahrzeuges verwendet werden.

Die Erfindung sowie das technische Umfeld werden nachfolgend anhand der Figur näher erläutert. Es ist darauf hinzuweisen, dass die Figur besonders bevorzugte Ausführungsvarianten zeigt, auf die die Erfindung jedoch nicht beschränkt ist.

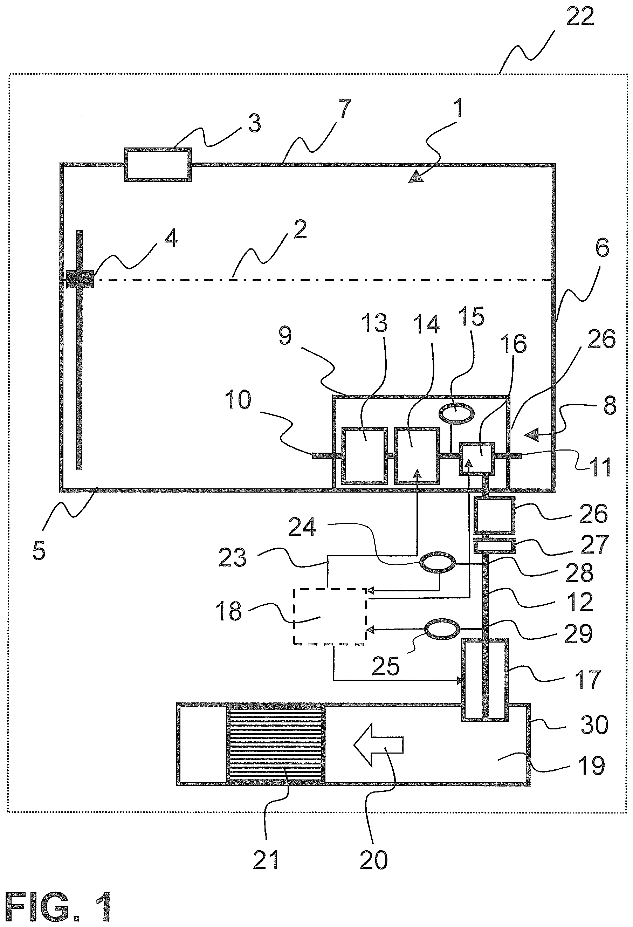

Die Fig. 1 ist schematisch und zeigt eine Vorrichtung mit einem Tank und einer Fördereinheit bei einem Kraftfahrzeug zur Durchführung des erfindungsgemäßen Verfahrens.

Die Figur zeigt schematisch ein Kraftfahrzeug 22 zur Bevorratung einer Flüssigkeit 2, insbesondere zur Bevorratung von flüssigem Reduktionsmittel wie eine wässrige Harnstofflösung. Der Tank 1 bildet einen Innenraum durch seine Begrenzungswände, die hier mit einer oberen Tankdecke 7, einem unten angeordneten Tankboden 5 und dazwischen liegenden Tankseiten 6 gebildet sind. Der hier dargestellte Tank 1 weist zudem in der Tankdecke 7 eine Füllöffnung 3 auf, über die der Tank 1 bedarfsgerecht mit Flüssigkeit 2 befüllt werden kann. Üblich ist auch, dass ein solcher Tank 1 einen oder mehrere Füllstandsmesser 4 aufweist.

Außermittig am Tankboden 5 ist nun eine Kammer 9 ausgebildet, in der eine Fördereinheit 8 angeordnet ist. In der Kammer 9 befindet sich keine Flüssigkeit 2, sondern dort sind die Komponenten zur Förderung der Flüssigkeit 2 aus dem Tank 1 hin zu einem Injektor 17 angeordnet. Die Fördereinheit 8 entnimmt dabei Flüssigkeit 2 über einen Ablauf 10, der ebenfalls in der Nähe des Tankbodens 5 angeordnet ist aus dem Inneren des Tanks 1. Die Fördereinheit 8 umfasst (in der hier angegebenen Reihenfolge der Durchströmung ausgehend von dem Ablauf 10) zunächst einen Filter 13, dann eine Pumpe 14 und ein Rücklauf-Ventil 16, mit denen die Flüssigkeit während des Betriebes hin zum Injektor 17 geleitet wird. In dem Leitungsabschnitt zwischen der Pumpe 14 und dem Rücklauf-Ventil 16 kann ein Temperatursensor 15 vorgesehen sein. Das Rücklauf-Ventil 16 ermöglicht alternativ zur Weiterleitung der Flüssigkeit 2 hin zu einem Injektor 17 auch die Förderung hin zu einem Rücklauf 11, über den die Flüssigkeit 2 wieder dem Tank 1 zugeführt wird und folglich aus der Kammer 9 in den Tank wieder austritt.

In der Injektionsleitung 12 hin zum Injektor 17 ist ein Zwischenspeicher 26, ein erster Drucksensor 24 an einer ersten Stelle 28 und ein zweiter Drucksensor 25 an einer zweiten Stelle 29 angeordnet. Die Pumpe 14 stellt in dem Zwischenspeicher 26 einen Druck von ungefähr 10 bar (anwendungsbezogen z. B. zwischen 8 und 12 bar) ein und hält diesen etwa konstant (wobei ggf. weitere Ventile zusätzlich eingesetzt werden können). Dies kann bei einem kleinen Zwischenspeicher 26 zur Folge haben, dass nach zweimaligem Betätigen des Ventils 27 (z. B. auch wenn das Ventil 27 in dem Injektor 17 verwirklicht ist) der Druck von ungefähr 10 bar im Zwischenspeicher 26 mittels der Pumpe 14 wieder hergestellt werden muss.

Für den Betrieb der Pumpe 14, des Rücklauf-Ventils 16, des Ventils 27, des Injektors 17 und/oder weiterer Komponenten ist eine Steuerung 18 vorgesehen, die mit Signalleitern 23 mit den Komponenten, insbesondere dem ersten Drucksensor 24 und dem zweiten Drucksensor 25 verbunden ist. Zusätzlich kann die Steuerung 18 mit verschiedenen Sensoren und/oder übergeordneten Steuerungen (wie beispielsweise einer Motorsteuerung) verbunden sein, um bedarfsgerecht die Förderung bzw. Heizung anzustoßen. Die Steuerung 18 kann ebenfalls in die Kammer 9 integriert sein.

Die Flüssigkeit 2 wird von der Fördereinheit 8 in den Zwischenspeicher 26 gefördert und dort auf einen Druck von bis zu 12 bar gesetzt. Das Ventil 27 regelt die Zuführung der Flüssigkeit 2 hin zum Injektor 17. Über den Injektor 17 wird die Flüssigkeit einer Abgasleitung 30 zugeführt, durch die Abgas 19 mit einer vorgegebenen Strömungsrichtung 20 strömt. Dabei kann eine Verdampfung (z. B. eine Thermophorese) bzw. Umsetzung (z. B. eine Hydrolyse) der Flüssigkeit 2 hin zu einem Reduktionsmittel für Stickoxide erfolgen, gegebenenfalls unter Zuhilfenahme von katalytisch aktiven Substanzen. Dieses Gemisch aus Reduktionsmittel und Abgas kann dann einer Abgasbehandlungseinheit 21, insbesondere einem Katalysator, zugeführt werden, so dass die Stickoxide in der Abgasleitung 30 reduziert werden. Die Zugabe der Flüssigkeit 2 erfolgt dabei bevorzugt unter Berücksichtigung der in der Abgasleitung 30 benötigten Menge an Flüssigkeit 2. Bei Abstellen des Kraftfahrzeugs 22 wird die im Zwischenspeicher 26 befindliche Flüssigkeit 2 in den Tank 1 entspannt.

Im Betrieb messen der erste Drucksensor 24 und der zweite Drucksensor 25 an der ersten Stelle 28 bzw. an der zweiten Stelle 29 mit Messraten von bis zu einigen 100.000 Hz Drücke in der Injektionsleitung 12. Aus vorzugebenden Anfangsbedingungen und den Druckmesswerten wird die Menge der Flüssigkeit, die in einer Zeiteinheit durch die Injektionsleitung fließt, bestimmt. Durch Integration der Flüssigkeitsmengen pro Zeiteinheit über einen vorgebbaren Zeitraum kann die gesamte Flüssigkeitsmenge, die in dem Zeitraum durch die Injektionsleitung 12 fließt, bestimmt werden. Durch Subtraktion der bestimmten Flüssigkeitsmenge von dem zuvor ermittelten bzw. der zuvor bestimmten Flüssigkeitsmenge im Tank kann zu jeder Zeit die aktuelle Flüssigkeitsmenge im Tank bestimmt werden.

Das erfindungsgemäße Verfahren erlaubt es, den genauen Verbrauch einer Flüssigkeit zu ermitteln und darüber hinaus die verbleibende Flüssigkeitsmenge in dem Tank zu bestimmen. Ferner ist mit dem erfindungsgemäßen Verfahren eine On Board Diagnose möglich.

### Bezugszeichenliste

- 1: Tank
- 2: Flüssigkeit
- 3: Füllöffnung
- 4: Füllstandsmesser
- 5: Tankboden
- 6: Tankseite
- 7: Tankdecke
- 8: Fördereinheit
- 9: Kammer
- 10: Ablauf
- 11: Rücklauf
- 12: Injektionsleitung
- 13: Filter
- 14: Pumpe
- 15: Temperatursensor
- 16: Rücklauf-Ventil
- 17: Injektor
- 18: Steuerung
- 19: Abgas
- 20: Strömungsrichtung
- 21: Abgasbehandlungseinheit
- 22: Kraftfahrzeug
- 23: Signalleiter
- 24: erster Drucksensor
- 25: zweiter Drucksensor
- 26: Zwischenspeicher
- 27: Ventil
- 28: erste Stelle
- 29: zweite Stelle
- 30: Abgasleitung

## Patentansprüche

1. Verfahren zur Bestimmung der aus einem Tank (1) entnommenen Menge eines flüssigen Reduktionsmittels (2) zur Abgasreinigung pro Zeiteinheit, wobei das Reduktionsmittel (2) von einer Pumpe (14) in Strömungsrichtung einem Rücklauf-Ventil (16) zugeführt wird und das Rücklauf-Ventil (16) das Reduktionsmittel zu einem Rücklauf (11) oder einer Injektionsleitung (12) leitet, wobei in der Injektionsleitung (12) ein Zwischenspeicher (26) angeordnet ist, und das Reduktionsmittel von dem Zwischenspeicher (26) einem Abgas (19) einer Verbrennungskraftmaschine diskontinuierlich zugeführt wird, umfassend mindestens die folgenden Schritte:
- Zuführen des Reduktionsmittels (2) zu dem Abgas (19) über die Injektionsleitung (12),
- Erfassen von zeitabhängigen Drücken gleichzeitig jeweils an mindestens zwei Stellen (28, 29) stromabwärts vom Zwischenspeicher (26) in der Injektionsleitung (12),
- Bestimmen der zugeführten Reduktionsmittelmenge pro Zeiteinheit aus den erfassten zeitabhängigen Drücken.

2. Verfahren nach Anspruch 1, wobei die zwischen einem ersten Zeitpunkt (t1) und einem zweiten Zeitpunkt (t2) entnommene gesamte Reduktionsmittelmenge (Fx) durch Integration der entnommenen Reduktionsmittelmengen pro Zeiteinheit über den Zeitraum vom ersten Zeitpunkt (t1) bis zum zweiten Zeitpunkt (t2) ermittelt wird.

3. Verfahren nach Anspruch 2, wobei zu dem ersten Zeitpunkt (t1) die in dem Tank (1) vorhandene Reduktionsmittelmenge (F1) bestimmt wird und die zu dem zweiten Zeitpunkt (t2) in dem Tank (1) vorhandene Reduktionsmittelmenge (F2) durch Subtraktion der ermittelten entnommenen Reduktionsmittelmenge (Fx) von der zum ersten Zeitpunkt (t1) vorhandenen Reduktionsmittelmenge (F1) ermittelt wird.

4. Verfahren nach Anspruch 3, wobei die in dem Tank vorhandene Reduktionsmittelmenge nach dem ersten Zeitpunkt (t1) quasi kontinuierlich ermittelt wird, so dass zu jedem Zeitpunkt ein Wert für die im Tank (1) vorhandene Reduktionsmittelmengezur Verfügung steht.

5. Verfahren nach einem der Ansprüche 1 bis 4, wobei das Zuführen des Reduktionsmittels (2) in diskontinuierlichen Injektionen von weniger als 100 ms erfolgt.

6. Verfahren nach Anspruch 5, wobei höchstens 0,1 ml Reduktionsmittel bei einer Injektion zugeführt werden.

7. Verfahren nach einem der vorhergehenden Ansprüche, wobei das Messen der Drücke nur während des Zuführens des Reduktionsmittels (2) erfolgt.

8. Verfahren nach einem der vorhergehenden Ansprüche, wobei die Drücke an den mindestens zwei Stellen (28, 29) in einem Zeitabstand erneut erfasst werden, in dem ein Schallsignal nicht von der ersten zu der zweiten Stelle durch das Reduktionsmittel (2) in der Injektionsleitung (12) gelangt.

9. Verfahren nach einem der vorhergehenden Ansprüche, wobei die zugeführte Reduktionsmittelmenge über die Lösung der instationären Strömungsgleichung kompressibler Medien bestimmt wird.

10. Verfahren nach einem der vorhergehenden Ansprüche, wobei die entnommenen Reduktionsmittelmengen pro Zeiteinheit mit vorgebbaren Sollmengen verglichen werden und bei Abweichungen oberhalb vorgebbarer Toleranzen ein Störungssignal erzeugt wird.

11. Verfahren nach einem der vorhergehenden Ansprüche, wobei die entnommenen Reduktionsmittelmengen pro Zeiteinheit mit vorgebbaren Sollmengen verglichen werden und bei Unterschreiten der Sollwerte erneut Reduktionsmittel (2) zugeführt wird oder die Dauer des Zuführens von Reduktionsmittel (2) verlängert wird.

12. Verfahren nach Anspruch 10 oder 11, wobei die Sollmengen in Abhängigkeit von Parametern anderer Komponenten eines Abgassystems der Verbrennungskraftmaschine vorgegeben werden.

13. Reduktionsmittel-Bereitstellungsvorrichtung für ein Kraftfahrzeug (22) mit einem Tank (1) für flüssiges Reduktionsmittel, einer Fördereinheit (8), die eingerichtet ist, das flüssige Reduktionsmittel mit einer Injektionsleitung (12) an einen Injektor (17) zu fördern, welcher an einer Abgasleitung (30) des Kraftfahrzeuges (22) angebracht werden kann, wobei das Reduktionsmittel (2) von einer Pumpe (14) in Strömungsrichtung einem Rücklauf-Ventil (16) zugeführt wird, und das Rücklauf-Ventil (16) das Reduktionsmittel (2) zu einem Rücklauf (11) zum Tank (1) oder der Injektionsleitung (12) leitet, und in der Injektionsleitung (12) ein Zwischenspeicher (26) angeordnet ist, und wobei stromabwärts vom Zwischenspeicher (26) in der Injektionsleitung (12) zumindest zwei Drucksensoren (24, 25) zur Erfassung eines Druckes vorgesehen sind und eine Steuerung (18) zur Durchführung des Verfahrens gemäß einem der vorhergehenden Patentansprüche eingerichtet ist.

## Claims

1. Method for determining the amount of a liquid reducing agent (2) for exhaust-gas purification that is removed from a tank (1) per unit time, wherein the reducing agent (2) is fed by a pump (14) to a return valve (16) in the flow direction and the return valve (16) directs the reducing agent to a return line (11) or to an injection line (12), wherein an intermediate store (26) is arranged in the injection line (12) and the reducing agent is fed discontinuously from the intermediate store (26) to an exhaust gas (19) of an internal combustion engine, comprising at least the following steps:
- feeding the reducing agent (2) to the exhaust gas (19) via the injection line (12),
- simultaneously detecting time-dependent pressures respectively at at least two points (28, 29) in the injection line (12) downstream of the intermediate store (26),
- determining the fed amount of reducing agent per unit time from the detected time-dependent pressures.

2. Method according to Claim 1, wherein the total amount of reducing agent (Fx) removed between a first time (t1) and a second time (t2) is determined by integrating the amounts of reducing agent removed per unit time over the period of time from the first time (t1) to the second time (t2).

3. Method according to Claim 2, wherein the amount of reducing agent (F1) present in the tank (1) is determined at the first time (t1), and the amount of reducing agent (F2) present in the tank (1) at the second time (t2) is determined by subtracting the determined amount of reducing agent (Fx) removed from the amount of reducing agent (F1) present at the first time (t1).

4. Method according to Claim 3, wherein the amount of reducing agent present in the tank is determined virtually continuously after the first time (t1), so that a value for the amount of reducing agent present in the tank (1) is available at any time.

5. Method according to one of Claims 1 to 4, wherein the reducing agent (2) is fed in discontinuous injections of less than 100 ms.

6. Method according to Claim 5, wherein at most 0.1 ml of reducing agent is fed during an injection.

7. Method according to one of the preceding claims, wherein the pressures are measured only while the reducing agent (2) is being fed.

8. Method according to one of the preceding claims, wherein the pressures at the at least two points (28, 29) are detected again within a time interval in which an acoustic signal does not pass from the first point to the second point through the reducing agent (2) in the injection line (12).

9. Method according to one of the preceding claims, wherein the fed amount of reducing agent is determined via the solution of the unsteady flow equation for compressible media.

10. Method according to one of the preceding claims, wherein the amounts of reducing agent removed per unit time are compared with predefinable target amounts and, in the event of deviations above predefinable tolerances, a fault signal is generated.

11. Method according to one of the preceding claims, wherein the amounts of reducing agent removed per unit time are compared with predefinable target amounts and, in the event of the target values being fallen below, reducing agent (2) is fed again or the duration of the feeding of reducing agent (2) is increased.

12. Method according to Claim 10 or 11, wherein the target amounts are predefined in dependence on parameters of other components of an exhaust-gas system of the internal combustion engine.

13. Reducing agent provision apparatus for a motor vehicle (22), having a tank (1) for liquid reducing agent, having a delivery unit (8) which is configured to deliver the liquid reducing agent to an injector (17) by way of an injector line (12), which injector can be attached to an exhaust-gas line (30) of the motor vehicle (22), wherein the reducing agent (2) is fed by a pump (14) to a return valve (16) in the flow direction and the return valve (16) directs the reducing agent (2) to a return line (11) to the tank (1) or to the injection line (12) and an intermediate store (26) is arranged in the injection line (12), and wherein at least two pressure sensors (24, 25) for detecting a pressure are provided in the injection line (12) downstream of the intermediate store (26) and a controller (18) is configured to carry out the method according to one of the preceding patent claims.

## Revendications

1. Procédé de détermination de la quantité d'un agent réducteur liquide (2), retirée d'un réservoir (1), pour épurer des gaz d'échappement par unité de temps, l'agent réducteur (2) étant amené par une pompe (14) dans le sens d'écoulement à une vanne de canalisation de retour (16) et la vanne de canalisation retour (16) guidant l'agent réducteur vers une canalisation de retour (11) ou une conduite d'injection (12), un réservoir intermédiaire (26) étant disposé dans la conduite d'injection (12), et l'agent réducteur étant amené de manière discontinue du réservoir intermédiaire (26) à des gaz d'échappement (19) d'un moteur à combustion interne, le procédé comprenant au moins les étapes suivantes :
- amener l'agent réducteur (2) aux gaz d'échappement (19) par le biais de la conduite d'injection (12),
- détecter des pressions dépendant du temps simultanément en au moins deux endroits (28, 29) en aval du réservoir intermédiaire (26) dans la conduite d'injection (12)
- déterminer la quantité d'agent réducteur amenée par unité de temps à partir des pressions détectées dépendant du temps.

2. Procédé selon la revendication 1, la quantité totale d'agent réducteur (Fx) retirée entre un premier instant (t1) et un deuxième instant (t2) étant déterminée par intégration de la quantité d'agent réducteur retirée par unité de temps sur l'intervalle de temps allant du premier instant (t1) jusqu'au deuxième instant (t2).

3. Procédé selon la revendication 2, la quantité d'agent réducteur (F1) présente dans le réservoir (1) étant déterminée au premier instant (t1) et la quantité d'agent réducteur (F2) présente dans le réservoir (1) au deuxième instant (t2) étant déterminée par soustraction de la quantité déterminée d'agent réducteur (Fx) retirée de la quantité d'agent réducteur (F1) présente au premier instant (t1).

4. Procédé selon la revendication 3, la quantité d'agent réducteur présente dans le réservoir étant déterminée de manière quasi continue après le premier instant (t1) de sorte qu'une valeur de la quantité d'agent réducteur présente dans le réservoir (1) est disponible à tout instant.

5. Procédé selon l'une des revendications 1 à 4, l'amenée de l'agent réducteur (2) étant effectuée par des injections discontinues de moins de 100 ms.

6. Procédé selon la revendication 5, un maximum de 0,1 ml d'agent réducteur étant amené lors d'une injection.

7. Procédé selon l'une des revendications précédentes, la mesure des pressions étant effectuée uniquement pendant l'amenée de l'agent réducteur (2).

8. Procédé selon l'une des revendications précédentes, les pressions en au moins deux endroits (28, 29) étant à nouveau détectées dans un intervalle de temps dans lequel un signal sonore ne passe pas du premier au deuxième endroit à travers l'agent réducteur (2) dans la conduite d'injection (12).

9. Procédé selon l'une des revendications précédentes, la quantité d'agent réducteur amenée étant déterminée par résolution de l'équation d'écoulement turbulent de milieux compressibles.

10. Procédé selon l'une des revendications précédentes, la quantité d'agent réducteur retirée par unité de temps étant comparée à des quantités de consigne spécifiables, et un signal de dysfonctionnement étant généré en cas d'écarts au-dessus de tolérances spécifiables.

11. Procédé selon l'une des revendications précédentes, les quantités d'agent réducteur retirées par unité de temps étant comparées à des quantités de consigne spécifiables et, si les valeurs de consigne ne sont pas atteintes, l'agent réducteur (2) étant à nouveau amené ou la durée d'amenée d'agent réducteur (2) étant prolongée.

12. Procédé selon la revendication 10 ou 11, les quantités de consigne étant spécifiées en fonction de paramètres d'autres composants d'un système de gaz d'échappement du moteur à combustion interne.

13. Dispositif d'alimentation en agent réducteur destiné à un véhicule automobile (22), ledit dispositif comprenant un réservoir (1) d'agent réducteur liquide, une unité de distribution (8) qui est conçue pour distribuer l'agent réducteur liquide, à l'aide d'une conduite d'injection (12), à un injecteur (17) qui peut être fixé à une conduite de gaz d'échappement (30) du véhicule automobile (22), l'agent réducteur (2) étant amené par une pompe (14) dans le sens d'écoulement à une vanne de canalisation de retour (16), et la vanne de canalisation de retour (16) guidant l'agent réducteur (2) vers une canalisation de retour (11) menant au réservoir (1) ou à la conduite d'injection (12), et un réservoir intermédiaire (26) étant disposé dans la conduite d'injection (12), et au moins deux capteurs de pression (24, 25) étant prévus pour détecter une pression en aval du réservoir intermédiaire (26) dans la conduite d'injection (12) et une commande (18) étant conçue pour mettre en œuvre le procédé selon l'une des revendications précédentes.
